# EUROPÄISCHE PATENTANMELDUNG

(11) **EP 1 862 252 A2**
(43) Veröffentlichungstag der Anmeldung: **05.12.2007**
(21) Anmeldenummer: 07010687.7
(22) Anmeldetag: 30.05.2007
(51) Int. Cl.: B23K 37/047, B23P 19/04, B62D 65/00

(54) **Spannvorrichtung zur Aufnahme verschiedener Bauteiltypen**

(30) Priorität: 31.05.2006 DE 102006025311
(71) Anmelder: GM Global Technology Operations, Inc., Detroit, MI 48265-3000 (US)
(72) Erfinder: Geiss, Karl-Heinz, 65428 Rüsselsheim (DE); Hilbert, Gerhard, 64579 Gernsheim (DE)
(74) Vertreter: Gebauer, Dieter Edmund

(57) **Zusammenfassung**

Die Erfindung zeigt eine Spannvorrichtung zur Aufnahme und lagegenauen Positionierung verschiedener Bauteiltypen, welche wenigstens ein um eine Drehachse drehbar gelagertes Drehelement (2), sowie wenigstens zwei am Drehelement (2) angebrachte, bauteiltypbezogene Aufnahmeelemente zur Aufnahme von Bauteilen umfasst, wobei die wenigstens zwei Aufnahmeelemente in Drehrichtung des Drehelements (2) versetzt zueinander angeordnet sind, so dass jedes Aufnahmeelement durch Drehen des Drehelements um die Drehachse in eine Arbeitsstellung zur Aufnahme und lagegenauen Positionierung eines Bauteils (13) gebracht werden kann.

## Beschreibung

Die vorliegende Erfindung liegt auf dem Gebiet der Fertigungs-und Montagetechnik und betrifft eine Spannvorrichtung zur Aufnahme und lagegenauen Positionierung verschiedener Bauteiltypen.

In der industriellen Massenfertigung von Kraftfahrzeugen wird die Fahrzeugkarosserie, bestehend aus Bodengruppe, Seiten- und Frontteilen und dem Fahrzeugdach, nach und nach in verschiedenen Arbeitsstationen zusammengesetzt, wobei einzelne Bauteile zunächst in separaten Arbeitsstationen zu größeren Bauteilgruppen vorgefügt werden können.

Um die Bauteile zu fügen, werden sie in den jeweiligen Arbeitsstationen in typbezogenen Spannvorrichtungen aufgenommen und lagegenau positioniert (fixiert), so dass Fügeroboter die Bauteile an definierten Fügestellen beispielsweise mittels Schweißung verbinden können. Die Spannvorrichtungen sind zu diesem Zweck meist mit so genannten Geometriegreifwerkzeugen ausgerüstet, die an die spezielle äußere (geometrische) Form des jeweilig aufzunehmenden Bauteiltyps angepasst sind.

Sollen in einer selben Spannvorrichtung verschiedene Bauteiltypen aufgenommen werden, bedeutet dies, dass die typbezogenen Geometriegreifwerkzeuge gewechselt werden müssen, was Zeit kostet und in aller Regel zu unerwünschten Stillstandszeiten in der Fertigung und zu Produktionsausfällen führt.

Um ein zeit- und kostenintensives Umrüsten von Spannvorrichtungen auf andere Bauteiltypen zu vermeiden, werden Spannvorrichtungen in Arbeitsstationen und Fertigungsstrassen gewöhnlich für einen stets gleichen Bauteiltyp eingerichtet und verwendet. Im Grunde bedeutet diese Vorgehensweise, dass aufgrund der Unterschiedlichkeit der Bauteiltypen für jeden Fahrzeugtyp und jedes Fahrzeugmodell separate Arbeitsstationen und Fertigungsstrassen eingesetzt werden müssen, was jedoch einen hohen Flächenbedarf, sowie hohe Investitions- und Personalkosten mit sich bringt.

Angesichts des in den letzten Jahren stetig gestiegenen Kostendrucks in der Fahrzeugfertigung ist man darum bemüht, Arbeitsstationen und Fertigungsstrassen möglichst vielfältig und flexibel einsetzen zu können, um hierdurch einerseits Investitions- und Personalkosten zu sparen und andererseits Flexibilität in der Fahrzeugfertigung zu ermöglichen, etwa wenn die Nachfrage nach bestimmten Fahrzeugmodellen nachlässt und demzufolge Kapazität für die Fertigung anderer Fahrzeugmodelle oder -typen frei wird.

In der Praxis steht diesem Unterfangen jedoch insbesondere die Notwendigkeit einer zeit- und kostenintensiven Umrüstung der typbezogenen Spannvorrichtungen auf andere Bauteiltypen entgegen, wie dargelegt wurde.

In der europäischen Patentschrift EP 1 100 715 B1 ist eine flexible Arbeitsstation zum Bearbeiten von unterschiedlichen Bauteiltypen, insbesondere in der Karosseriemontage, beschrieben. Die beschriebene Arbeitsstation umfasst bauteilneutrale und bauteilspezifische Anlagenkomponenten, wobei Transportroboter mit wechselbaren, typbezogenen Greifwerkzeugen als bauteilspezifische Anlagekomponenten versehen sind. In der dort gezeigten Arbeitsstation sind die Bauteile mit Ablagen für die Greifwerkzeuge versehen. Um bei einem Wechsel des Bauteiltyps die benötigte Zeit zum Wechseln von Greifwerkzeugen zu vermindern, wird das Greifwerkzeug auf einem Bauteil vom alten Typ abgelegt, wobei dieses Bauteil bei einem erneuten Wechsel des Bauteiltyps als erstes bearbeitet wird.

Nachteilig bei dieser Vorgehensweise ist insbesondere die Tatsache, dass der Wechsel des Greifwerkzeugs an sich, das heißt, das Ablegen und Aufnehmen des Greifwerkzeugs durch den Transportroboter immer noch relativ viel Zeit in Anspruch nimmt und demzufolge mit unerwünschten Ausfallzeiten zu rechnen ist.

Demgegenüber besteht die Aufgabe der vorliegenden Erfindung darin, eine Spannvorrichtung für verschiedene Bauteiltypen zur Verfügung zu stellen, durch welche ein Wechsel von typbezogenen Aufnahmeelementen zur Aufnahme und lagegenauen Positionierung verschiedener Bauteiltypen gegenüber herkömmlichen Spanneinrichtungen schnell und einfach erfolgen kann, so dass unerwünschte Stillstandszeiten und Produktionsausfälle in Arbeitsstationen und Fertigungsstrassen weitgehend vermieden werden können.

Diese Aufgabe nach dem Vorschlag der Erfindung durch eine Spannvorrichtung mit den Merkmalen des unabhängigen Anspruchs gelöst. Vorteilhafte Ausgestaltungen der Erfindung sind durch die Merkmale der Unteransprüche angegeben.

Erfindungsgemäß ist eine Spannvorrichtung zur Aufnahme (zum Halten) und lagegenauen Positionierung (räumliche Fixierung) von verschiedenen Bauteiltypen gezeigt. Die erfindungsgemäße Spannvorrichtung umfasst hierbei wenigstens ein um eine Drehachse drehbar gelagertes Drehelement, sowie wenigstens zwei am Drehelement starr angebrachte, (Bauteil-)typbezogene Aufnahmeelemente zur Aufnahme und lagegenauen Positionierung verschiedener Bauteiltypen.

Erfindungsgemäß sind die Aufnahmeelemente in Drehrichtung (Umfangsrichtung) des Drehelements versetzt zueinander angeordnet, so dass jedes typbezogene Aufnahmeelement durch Drehen des Drehelements um seine Drehachse von einer Ruhestellung in eine Arbeitsstellung zur Aufnahme und lagegenauen Positionierung eines Bauteils gebracht werden kann. Zudem können die Aufnahmeelemente in einer Richtung parallel zur Drehachse des Drehelements relativ zueinander versetzt sein. Die Aufnahmeelemente können hierbei an einem Trägerelement, beispielsweise in Form einer Trägerplatte, starr befestigt sein, welches seinerseits, insbesondere lösbar, am Drehelement befestigt werden kann. Hierdurch können Aufnahmeelemente in besonders einfacher Weise schnell ausgewechselt werden.

In der erfindungsgemäßen Spannvorrichtung sind die Aufnahmeelemente beispielsweise in Form von an eine äußere Form eines Bauteils angepassten Geometriegreifwerkzeugen zum Greifen eines Bauteils ausgebildet.

Vorteilhafter Weise können in der erfindungsgemäßen Spannvorrichtung die verschiedenen Aufnahmeelemente, welche in Drehrichtung des Drehelements versetzt am Drehelement angeordnet sind, durch Drehen des Drehelements um seine Drehachse schnell und einfach in ihre jeweilige Arbeitsposition zur Aufnahme und lagegenauen Positionierung von Bauteilen gebracht werden. Hierdurch können durch Drehen des Drehelements verschiedene Bauteiltypen aufgenommen und lagegenau positioniert werden. Vorteilhafter Weise ist somit zum Wechsel von typbezogenen Aufnahmeelementen kein zeitaufwändiges Entfernen und Wiederanbringen von jeweiligen Aufnahmeelementen in der Spannvorrichtung notwendig, sondern erfordert lediglich ein Drehen des Drehelements.

Bei einer vorteilhaften Ausgestaltung der erfindungsgemäßen Spannvorrichtung sind wenigstens zwei Sätze von Aufnahmeelementen (Aufnahmeelementsätze) vorgesehen. Hierbei enthält jeder Aufnahmeelementsatz wenigstens zwei typbezogene Aufnahmeelemente, die in einer Richtung parallel zur Drehachse relativ zueinander versetzt sein können und an denselben speziellen Bauteiltyp angepasst sind. Die Aufnahmeelementsätze selbst sind in Drehrichtung (Umfangsrichtung) des Drehelements versetzt zueinander angeordnet, derart dass jeder Aufnahmeelementsatz durch Drehen des Drehelements um seine Drehachse in eine Drehstellung gebracht werden kann, bei dem sich alle Aufnahmeelemente eines selben Aufnahmeelementsatzes in Arbeitsstellung zur Aufnahme eines Bauteils befinden.

Bei obiger Ausgestaltung der erfindungsgemäßen Spannvorrichtung ist vorteilhaft jeder Aufnahmeelementsatz in Modulform am Drehelement angebracht. Hierbei ist es beispielsweise möglich, dass die Aufnahmeelemente eines selben Aufnahmeelementsatzes an einem selben Aufnahmeelementträger, welcher beispielsweise in Form einer Trägerplatte vorliegt, befestigt sind. Der Aufnahmeelementträger mit den daran befestigten Aufnahmeelementen formt ein Aufnahmeelementsatzmodul, das in einfacher Weise am Drehelement angebracht und entfernt werden kann. Das Aufnahmeelementsatzmodul bzw. der Aufnahmeelementträger mit den daran befestigen Aufnahmeelementen ist vorteilhaft lösbar am Drehelement befestigt.

Gemäß einer weiteren Ausgestaltung der erfindungsgemäßen Spannvorrichtung weist das Drehelement eine lang gestreckte (längliche) Form entlang seiner Drehachse auf. Vorteilhaft ist das Drehelement hierbei in Form eines Vierkant- oder zylindrischen Rohrs mit quadratischer bzw. runder Querschnittsfläche senkrecht zur Drehachse ausgebildet. Bei einem vierkantförmigen Drehelement können die Aufnahmeelemente beziehungsweise Aufnahmeelementsätze bzw. Aufnahmeelementsatzmodule in besonders einfacher Weise an den (Rohr-)flächen des Vierkant-Rohrs in Umfangsrichtung versetzt angebracht werden. Beispielsweise durch jeweiliges Drehen um 90° können die verschiedenen Aufnahmeelemente bzw. Aufnahmeelementsätze bzw. Aufnahmeelementsatz-Module jeweils in Arbeitsstellung gebracht werden.

Bei einer weiteren besonders bevorzugten Ausgestaltung der erfindungsgemäßen Spannvorrichtung ist eine Mehrzahl (zwei, drei, vier oder mehr) wie oben beschriebener Drehelemente vorgesehen, welche derart miteinander mechanisch und steuertechnisch gekoppelt sind, dass sie, beispielsweise mittels eines motorischen Antriebs, synchron zueinander um ihre jeweiligen Drehachsen gedreht werden können. Hierdurch können in besonders vorteilhafter Weise typbezogene Aufnahmeelemente beziehungsweise typbezogene Aufnahmeelementsätze, die sich an verschiedenen Drehelementen befinden, synchron in ihre jeweilige Arbeitsstellung zur Aufnahme und lagegenauen Positionierung eines selben Bauteils gebracht werden, so dass ein Bauteil in besonders einfacher Weise beispielsweise von mehreren Seiten her aufgenommen und lagegenau positioniert werden kann. Die Drehelemente können hierbei beispielsweise mittels eines Winkelgetriebes (beispielsweise in Form eines Kegelradgetriebes) mechanisch gekoppelt (drehgekoppelt) sein. Insbesondere können die zum Zwecke einer synchronen Bewegung in Arbeitsstellung drehgekoppelten Drehelemente nur durch einen (einzigen) Antrieb (beispielsweise Antriebsmotor) gedreht werden, wobei lediglich ein (einziges) Drehelement direkt vom Antrieb gedreht wird und die anderen Drehelemente über die Drehkopplung der Drehelemente mitgedreht werden. Hierdurch können die Aufnahmeelemente bzw. Aufnahmeelementsätze aller Drehelemente zuverlässig und synchron in ihre Arbeitsstellung gebracht werden. Insbesondere können hierdurch alle Drehelemente innerhalb der für die industrielle Serienfertigung typischen Taktzeiten (d. h. beispielsweise innerhalb eines Zeitintervalls, in dem ein Bauteil von einer Spannvorrichtung einer Arbeitsstation zu einer nächsten Spannvorrichtung einer weiteren Arbeitsstation weitergereicht wird) von beispielsweise 5 Sekunden in ihre jeweilige Arbeitsstellung gedreht werden. In vorteilhafter Weise können Kosten eingespart werden, wenn lediglich ein Antrieb zur Drehung aller Drehelemente einer selben Spannvorrichtung vorgesehen ist.

Bei einer weiteren Ausgestaltung der erfindungsgemäßen Spannvorrichtung ist dieses mit einem motorischen Antrieb versehen, welcher mit wenigstens einem Drehelement mechanisch und steuertechnisch so gekoppelt ist, dass das Drehelement um seine Drehachse gedreht werden kann.

Weiterhin kann an der erfindungsgemäßen Spannvorrichtung wenigstens eine Drehelement-Drehpositionsfixierungseinrichtung zur Fixierung wählbarer Drehpositionen eines Drehelements um dessen Drehachse vorgesehen sein. Hierdurch kann ein jedes der Drehelemente besonders einfach und sicher in eine definierbare Drehposition gebracht werden, in der sich jeweilige Aufnahmeelemente oder Aufnahmeelementsätze in ihrer Arbeitsstellung zur Aufnahme eines Bauteiltyps befinden. Falls die Drehelemente drehgekoppelt sind, derart, dass bei Drehung eines Drehelements die anderen Drehelemente mitdrehen, genügt es in vorteilhafter Weise, wenn lediglich an einem Drehelement eine Drehelement-Drehpositionsfixierungseinrichtung angeordnet ist.

Darüber hinaus kann an der erfindungsgemäßen Spannvorrichtung wenigstens ein Sensor zur Erfassung von Drehpositionen eines Drehelements und/oder Funktionszuständen von daran angebrachten Aufnahmeelementen (wie Öffnungs- oder Schließpositionen von Geometriegreifwerkzeugen) vorgesehen sein. Hierdurch können zuverlässig Drehpositionen von Drehelementen und/oder Funktionszustände daran angebrachter Aufnahmeelemente erfasst werden.

Ferner kann an der erfindungsgemäßen Spannvorrichtung wenigstens ein an wenigstens einem Drehelement angebrachtes Bearbeitungselement, insbesondere zur mechanischen Bearbeitung des Bauteils, beispielsweise in Form einer Fügevorrichtung, vorgesehen sein.

Die Erfindung wird nachfolgend unter Bezugnahme auf ein Ausführungsbeispiel näher erläutert, wobei Bezug auf die beigefügten Figuren genommen wird. Es zeigen:
- Fig. 1: eine perspektivische Ansicht von schräg oben miteinander drehgekoppelter Drehelemente als Teil einer beispielhaften Ausgestaltung der erfindungsgemäßen Spannvorrichtung;
- Fig. 2: eine perspektivische Ansicht von schräg oben einer erfindungsgemäßen Spannvorrichtung, in welchem der in Fig. 1 dargestellte Teil der Spannvorrichtung enthalten ist.

In den Figuren sind gleiche beziehungsweise gleichwirkende Bauteile mit den gleichen Bezugszeichen bezeichnet.

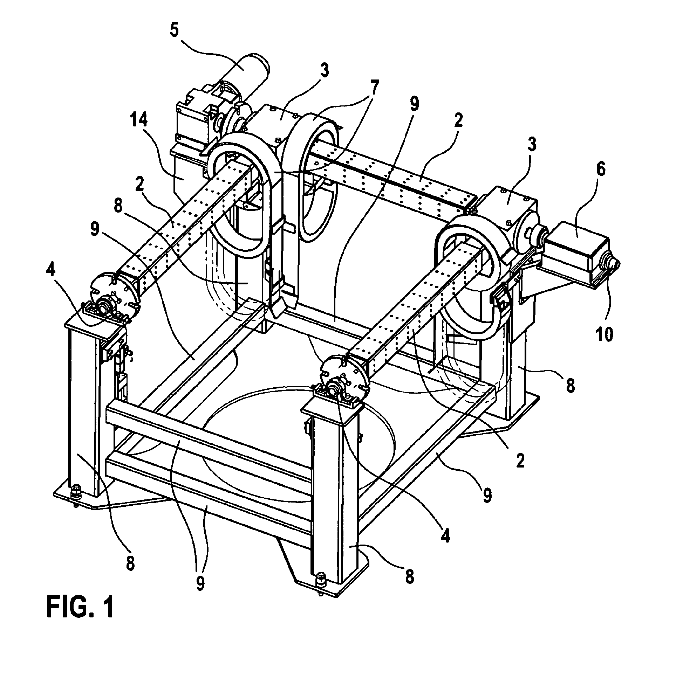

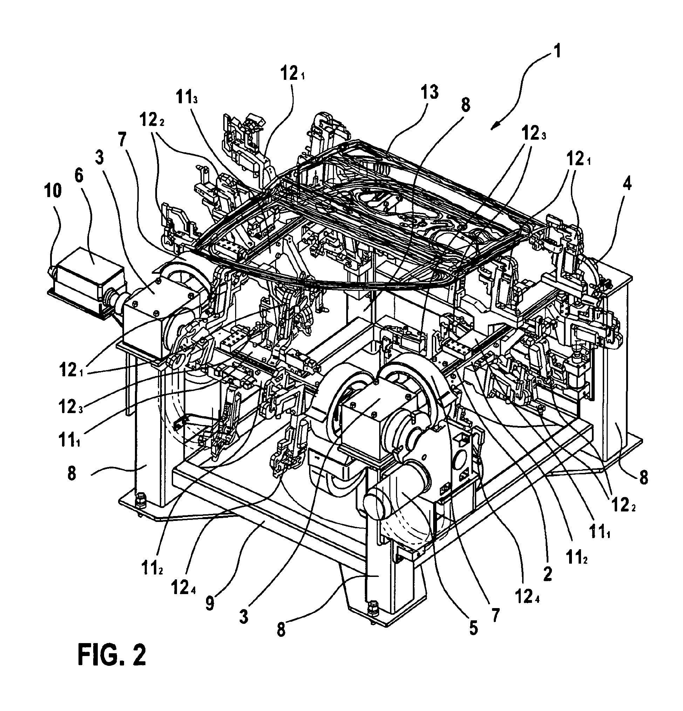

In den Fig. 1 und 2 sind perspektivische Ansichten einer beispielhaften Ausgestaltung der erfindungsgemäßen Spannvorrichtung gezeigt, wobei in Fig. 1 zum besseren Verständnis der Erfindung lediglich ein die miteinander drehgekoppelten Drehelemente umfassender Teil der Spannvorrichtung dargestellt ist.

Demnach umfasst die erfindungsgemäße Spannvorrichtung, die insgesamt mit der Bezugszahl 1 bezeichnet ist, drei Drehelemente 2 in Form von Vierkant-Rohren, die mechanisch und steuertechnisch mithilfe von zwei Winkelgetrieben in Form von Kegelradgetrieben 3 gekoppelt sind, so dass sie synchron zueinander gedreht werden können. Die Kegelradgetriebe 3 sind zu diesem Zweck jeweils mit zwei Abtrieben versehen. Die Drehachsen der als Vierkant-Rohre geformten Drehelemente 2 verlaufen parallel zur Längsrichtung der Vierkant-Rohre.

In dem dargestellten Ausführungsbeispiel sind die Drehelemente 2 entlang den Rändern eines Quadrats angeordnet und ermöglichen so die Aufnahme und lagegenaue Positionierung eines Bauteils von drei verschiedenen Seiten her. Hierbei ist eines der Vierkant-Rohre an seinen beiden Stirnflächen mithilfe der beiden Kegelradgetriebe 3 mit den anderen Vierkant-Rohren drehgekoppelt, während die anderen beiden Vierkant-Rohre jeweils an einer ihrer beiden Stirnflächen mit den Kegelradgetrieben 3 drehgekoppelt und an den anderen ihrer beiden Stirnflächen jeweils in einem Drehlager 4 drehbar gelagert sind. Die Drehelemente 2 können mithilfe eines einzigen Elektromotors 5 synchron gedreht werden, welcher so mit einem Antrieb eines der beiden Kegelradgetriebe 3 verbunden ist (beispielsweise mithilfe einer gezahnten Verbindung), dass er dieses drehen kann. Das andere Kegelradgetriebe 3 wird durch das mit beiden Kegelradgetrieben 3 gekoppelte Drehelement 2 mitgedreht, wenn dieses Drehelement 2 durch das mit dem Elektromotor 5 gekoppelte Drehelement gedreht wird. Eine elektrische/hydraulische Versorgung der Spannvorrichtung 1 erfolgt über eine Mehrzahl Kabelschlepps 7, welche eine Drehbewegung der Drehelemente 2 zulassen.

Mithilfe eines elektronischen Schaltwerks 6, welches mit dem mit dem Elektromotor 5 nicht verbundenen Kegelradgetriebe 3 gekoppelt ist, können verschiedene Drehpositionen der synchron bewegten Drehelemente 2 elektronisch erfasst und mittels eines Ausgangsanschlusses 10 an eine übergeordnete Anlagensteuerung (nicht dargestellt) übermittelt werden. Aufgrund der synchronen Bewegung der Drehelemente 2 genügt es, wenn die Drehposition lediglich eines einzigen Drehelements 2 von dem Schaltwerk 6 erfasst wird.

Eine Absteckeinheit 14, durch welche ein Stiftglied in jeweilige Stecköffnungen eines Drehelements 2 eingebracht werden kann, ermöglicht, dass definierbare Drehpositionen der synchron bewegten Drehelemente 2 genau eingenommen werden können, so dass die Aufnahmeelemente sehr genau und zuverlässig in ihre jeweilige Arbeitsposition zur Aufnahme und lagegenauen Positionierung von Bauteilen gebracht werden können. Die Drehpositionen der Drehelemente 2 sind hierbei durch die Lage der Stecköffnungen definiert. Aufgrund der synchronen Bewegung der Drehelemente 2 genügt es, wenn an lediglich einem einzigen der Drehelemente 2 Stecköffnungen geformt werden.

Die über die beiden Kegelradgetriebe 3 miteinander gekoppelten Drehelemente 2 sind auf vier, an den Ecken des oben erwähnten Quadrats angeordneten Stützträgern 8 gelagert, wobei jeweilige Stirnflächen der Stützträger 8 die beiden Kegelradgetriebe 3 und die beiden Drehlager 4 tragen. Die Stützträger 8 sind durch Querträger 9 verbunden.

Wie Fig. 2 entnommen werden kann, sind in der als Ausführungsbeispiel erläuterten, erfindungsgemäßen Spannvorrichtung 1 eine Mehrzahl von Aufnahmeelementen in Form typbezogener Geometriegreifwerkzeuge zur Aufnahme und lagegenauen Positionierung verschiedener Bauteiltypen vorgesehen. Bei den Bauteilen handelt es sich vorzugsweise um Karosseriebauteile in der Kraftfahrzeugfertigung.

An jedem Drehelement 2 sind Aufnahmeelemente in Form typbezogener Geometriegreifwerkzeuge in vier modulartigen Aufnahmeelementsätzen (Aufnahmeelementsatzmodule) befestigt. Jedes Aufnahmeelementsatzmodul umfasst hierbei eine Trägerplatte und zwei daran befestigte, typbezogene Geometriegreifwerkzeuge, die jeweils an einen bestimmten (gleichen) Bauteiltyp angepasst sind. In dem gezeigten Ausführungsbeispiel sind in jedem Aufnahmeelementsatzmodul zwei Geometriegreifwerkzeuge angeordnet, welche in einer Richtung parallel zur Drehachse des zugehörigen Drehelements relativ zueinander versetzt sind. Gleichwohl ist es auch möglich, eine größere Anzahl von Geometriegreifwerkzeugen in einem Aufnahmeelementsatzmodul vorzusehen.

In dem dargestellten Ausführungsbeispiel sind an jedem Drehelement 2 ein erstes Aufnahmeelementsatzmodul, welches eine Trägerplatte 11₁ und die daran befestigten ersten Geometriegreifwerkzeuge 12₁ umfasst, ein zweites Aufnahmeelementsatzmodul, welches eine Trägerplatte 11₂ und die daran befestigten zweiten Geometriegreifwerkzeuge 12₂ umfasst, ein drittes Aufnahmeelementsatzmodul, welches eine Trägerplatte 11₃ und die daran befestigten dritten Geometriegreifwerkzeuge 12₃ umfasst, sowie ein viertes Aufnahmeelementsatzmodul, welches eine Trägerplatte 11₄ und die daran befestigten vierten Geometriegreifwerkzeuge 12₄ umfasst, befestigt. An jedem als Vierkant-Rohr geformten Drehelement 2 sind die Trägerplatten 11₁ , 11₂ , 11₃, 11₄ der Aufnahmeelementsatzmodule an den vier Seitenflächen befestigt, so dass die Aufnahmeelementsatzmodule in Drehrichtung (Umfangsrichtung) der als Vierkant-Rohre geformten Drehelemente 2 versetzt zueinander angeordnet sind. Die Trägerplatten 11₁,11₂, 11₃, 11₄ der Aufnahmeelementsatzmodule sind hierbei lösbar am zugehörigen Vierkant-Rohr befestigt, so dass ein einfacher und schneller Wechsel von Aufnahmeelementsatzmodulen ermöglicht ist.

Die vier Aufnahmeelementsatzmodule können durch Drehen des zugehörigen Drehelements 2 um seine Drehachse in ihre jeweiligen Arbeitspositionen gebracht werden, in der die Geometriegreifwerkzeuge in einer zur Aufnahme und lagegenauen Positionierung von Bauteilen geeigneten Position sind. In dem Ausführungsbeispiel von Fig. 2 befinden sich die Aufnahmeelementsatzmodule dann in ihrer Arbeitsposition, wenn deren Trägerplatte eine horizontale Lage hat, was in Fig. 2 für das erste Aufnahmeelementsatzmodul mit der Trägerplatte 11₁ und den daran befestigten ersten Geometriegreifwerkzeugen 12₁ der Fall ist.

Bezüglich der drei Drehelemente 2 sind die vier Aufnahmeelementsatzmodule an einander entsprechenden Seitenflächen der drei Vierkant-Rohre angebracht, so dass durch eine synchrone Drehung der Drehelemente 2 zugleich alle ersten Aufnahmeelementsatzmodule, zugleich alle zweiten Aufnahmeelementsatzmodule, zugleich alle dritten Aufnahmeelementsatzmodule bzw. zugleich alle vierten Aufnahmeelementsatzmodule der drei Drehelemente 2 in eine Arbeitsposition zur Aufnahme und lagegenauen Positionierung von Bauteilen gebracht werden können.

In dem dargestellten Ausführungsbeispiel von Fig. 2 befinden sich die ersten Geometriegreifwerkzeuge 12₁ aller ersten Aufnahmeelementsatzmodule in ihrer Arbeitsposition zur Aufnahme und lagegenauen Positionierung eines Bauteils, bei welchem es sich beispielsweise um ein Karosseriegerippe einer linken Kraftfahrzeugvordertür 13 handelt. Die Kraftfahrzeugvordertür 13 wird durch die ersten Geometriegreifwerkzeuge 12₁ der ersten Aufnahmeelementsatzmodule von drei verschiedenen Seiten her gehalten. Gleichzeitig befinden sich die zweiten, dritten und vierten Geometriegreifwerkzeuge 12₂, 12₃, 12₄ der zweiten, dritten und vierten Aufnahmeelementsatzmodule jeweils in einer Ruheposition, in denen sie kein Bauteil aufnehmen. Genauer ragen die zweiten und dritten Geometriegreifwerkzeuge 12₂, 12₃ der zweiten und dritten Aufnahmeelementsatzmodule jeweils zur Seite weg, während die vierten Geometriegreifwerkzeuge 12₄ der vierten Aufnahmeelementsatzmodule nach unten ragen. Durch synchrones Drehen der Drehelemente 2 können jeweils alle ersten Geometriegreifwerkzeuge 12₁, alle zweiten Geometriegreifwerkzeuge 12₂, alle dritten Geometriegreifwerkzeuge 12₃, bzw. alle vierten Geometriegreifwerkzeuge 12₄ in ihre jeweiligen Arbeitspositionen gebracht werden. Die ersten, zweiten, dritten und vierten Geometriegreifwerkzeuge sind jeweils an verschiedene Bauteiltypen angepasst. Wie in Fig. 2 dargestellt ist, sind die ersten Geometriegreifwerkzeuge 12₁ beispielsweise an das Karosseriegerippe einer linken Kraftfahrzeugvordertür, die zweiten Geometriegreifwerkzeuge 12₂ beispielsweise an das Karosseriegerippe einer linken Kraftfahrzeughintertür, die dritten Geometriegreifwerkzeuge 12₃ beispielsweise an das Karosseriegerippe einer rechten Kraftfahrzeughintertür, und die vierten Geometriegreifwerkzeuge 12₄ beispielsweise an das Karosseriegerippe einer rechten Kraftfahrzeugvordertür angepasst.

In Fig. 1 und Fig. 2 ist lediglich eine beispielhafte Ausgestaltung der erfindungsgemäßen Spannvorrichtung dargestellt, welche die Erfindung in keiner Weise einschränken soll. Beispielsweise ist es erfindungsgemäß möglich und vorgesehen, eine geringere oder größere Anzahl von Drehelementen oder eine geringere oder größere Anzahl von Aufnahmeelementen, insbesondere in Form von Geometriegreifwerkzeugen, anzuordnen.

### Bezugszeichenliste

Fig. 1 und 2
- 1: Spannvorrichtung
- 2: Drehelement
- 3: Kegelradgetriebe
- 4: Drehlager
- 5: Elektromotor
- 6: Stellwerk
- 7: Kabelschlepp
- 8: Stützträger
- 9: Querträger
- 10: Ausgangsanschluss
- 11₁: Trägerplatte
- 11₂: Trägerplatte
- 11₃: Trägerplatte
- 11₄: Trägerplatte
- 12₁: Geometriegreifwerkzeug
- 12₂: Geometriegreifwerkzeug
- 12₃: Geometriegreifwerkzeug
- 12₄: Geometriegreifwerkzeug
- 13: Bauteil
- 14: Absteckeinheit

## Patentansprüche

1. Spannvorrichtung zur Aufnahme und lagegenauen Positionierung verschiedener Bauteiltypen, welche wenigstens ein um eine Drehachse drehbar gelagertes Drehelement (2), sowie wenigstens zwei am Drehelement (2) angebrachte, bauteiltypbezogene Aufnahmeelemente zur Aufnahme von Bauteilen umfasst, wobei die wenigstens zwei Aufnahmeelemente in Drehrichtung des Drehelements (2) versetzt zueinander angeordnet sind, derart, dass jedes Aufnahmeelement durch Drehen des Drehelements um dessen Drehachse in eine Arbeitsstellung zur Aufnahme und lagegenauen Positionierung eines Bauteils (13) gebracht werden kann.

2. Spannvorrichtung nach Anspruch 1, **dadurch gekennzeichnet, dass** jedes Aufnahmeelement mittels eines Trägerelements lösbar am Drehelement (2) angebracht ist.

3. Spannvorrichtung nach Anspruch 1 oder 2, **gekennzeichnet durch** wenigstens zwei Aufnahmeelementsätze (12₁, 12₂, 12₃, 12₄), von denen jeder wenigstens zwei, in Richtung entlang der Drehachse versetzte Aufnahmeelemente (12₁; 12₂; 12₃; 12₄) enthält, wobei die wenigstens zwei Aufnahmeelementsätze in Drehrichtung des Drehelements (2) versetzt zueinander angeordnet sind, derart dass jeder Aufnahmeelementsatz **durch** Drehen des Drehelements um die Drehachse in eine Arbeitsstellung zur Aufnahme eines Bauteils **durch** seine Aufnahmeelemente gebracht werden kann.

4. Spannvorrichtung nach Anspruch 3, **dadurch gekennzeichnet, dass** jeder Aufnahmeelementssatz (12₁; 12₂; 12₃; 12₄) in Modulform am Drehelement (2) angebracht ist.

5. Spannvorrichtung nach Anspruch 4, **dadurch gekennzeichnet, dass** jedes Aufnahmeelementsatzmodul (12₁; 12₂; 12₃; 12₄) mittels eines Trägerelements (11₁; 11₂; 11₃; 11₄) lösbar am Drehelement (2) angebracht ist.

6. Spannvorrichtung nach einem der vorhergehenden Ansprüche 1 bis 5, **dadurch gekennzeichnet, dass** das Drehelement eine lang gestreckte Form entlang seiner Drehachse hat.

7. Spannvorrichtung nach Anspruch 6, **dadurch gekennzeichnet, dass** das Drehelement in Form eines Vierkant-Rohrs oder zylindrischen Rohrs ausgebildet ist.

8. Spannvorrichtung nach Anspruch 7, **gekennzeichnet durch** an den Flächen des Vierkant-Rohrs angebrachte Aufnahmeelemente beziehungsweise Aufnahmeelementmodule.

9. Spannvorrichtung nach einem der vorhergehenden Ansprüche 1 bis 8, **gekennzeichnet durch** eine Mehrzahl Drehelemente (2), welche miteinander drehgekoppelt sind, derart, dass sie synchron zueinander um ihre jeweiligen Drehachsen gedreht werden.

10. Spannvorrichtung nach Anspruch 9, **dadurch gekennzeichnet, dass** die Drehelemente (2) mittels eines Winkelgetriebes, beispielsweise ein Kegelradgetriebe, drehgekoppelt sind.

11. Spannvorrichtung nach einem der vorhergehenden Ansprüche 9 bis 10, **gekennzeichnet durch** einen mit nur einem einzigen Drehelement (2) drehgekoppelten, motorischen Antrieb (5) zur Drehung des Drehelements um seine Drehachse.

12. Spannvorrichtung nach einem der vorhergehenden Ansprüche 1 bis 11, **gekennzeichnet durch** eine Drehelement-Drehpositionfixierungseinrichtung zur Fixierung wählbarer Drehpositionen wenigstens eines Drehelements (2) um seine Drehachse.

13. Spannvorrichtung nach Anspruch 9, **gekennzeichnet durch** eine einzige Drehelement-Drehpositionfixierungseinrichtung zur Fixierung wählbarer Drehpositionen eines selben Drehelements (2) um seine Drehachse.

14. Spannvorrichtung nach einem der vorhergehenden Ansprüche 1 bis 13, **gekennzeichnet durch** ein Sensorelement zur Erfassung von Drehpositionen wenigstens eines Drehelements (2).

15. Spannvorrichtung nach Anspruch 9, **gekennzeichnet durch** ein einziges Sensorelement zur Erfassung von Drehpositionen eines selben Drehelements (2).

16. Spannvorrichtung nach einem der vorhergehenden Ansprüche 1 bis 15, **dadurch gekennzeichnet, dass** die Aufnahmeelemente in Form von Geometriegreifwerkzeugen ausgebildet sind.

17. Spannvorrichtung nach einem der vorhergehenden Ansprüche 1 bis 16, **gekennzeichnet durch** wenigstens ein an wenigstens einem Drehelement angebrachtes Bearbeitungselement zur Bearbeitung des Bauteils.
